# EUROPEAN PATENT APPLICATION

(11) **EP 4 700 900 A1**
(43) Date of publication of application: **25.02.2026**
(21) Application number: 25197001.8
(22) Date of filing: 20.08.2025
(51) Int. Cl.: H01M 10/42, A62C 3/16, H01M 10/48, H01M 50/244, H01M 50/249, H01M 50/264

(54) **SYSTEM AND METHOD FOR AUTOMATICALLY RELEASING BATTERY MODULE**

(30) Priority: 21.08.2024 KR 20240112209
(71) Applicant: SAMSUNG SDI CO., LTD., Yongin-si, Gyeonggi-do 17084 (KR)
(72) Inventor: NAM, Joongwoo, Yongin-si, Gyeonggi-do 17084 (KR); MOON, Pil Yong, Yongin-si, Gyeonggi-do 17084 (KR)
(74) Representative: Marks & Clerk LLP

(57) **Abstract**

A system and method for automatically releasing a battery module, and more particularly, to a system and method for automatically selectively releasing a battery module from the entire structure when a high temperature or the generation of heat is detected in a module unit stack structure are disclosed. The system includes a battery module including at least one battery cell, a battery rack in which the battery module is held, and a battery control unit configured to perform control to automatically release the battery module from the battery rack. The battery module is fixed on a module installation structure incline of the battery rack by a module fixing device, and is released from the battery rack along the module installation structure incline as the module fixing device is operated under the control of the battery control unit when an issue occurs in the battery module.

## Description

### FIELD

The present disclosure relates to a system and method for automatically releasing a battery module, and more particularly, to a system and method for automatically selectively releasing a battery module from the entire structure when a high temperature or the generation of heat is detected in a module unit stack structure.

### BACKGROUND

An ESS system has a structure in which batteries are manufactured in the form of a module and stacked in a rack structure within a container in order to store energy. In order to construct the ESS system, as few as several hundreds of batteries and as many as hundreds of thousands to millions of batteries or more are required. If a fire occurs in any one of the batteries due to the generation of heat, there are problems in that the scale of damage is too great and it is difficult to extinguish the fire although the fire is previously detected.

That is, although a fire within the ESS battery is detected and an extinguishment material is sprayed, there is a problem in that the fire is turned into a great fire because the fire affects surrounding batteries connected to the battery on fire if initial extinguishment fails.

If the module is fixed to a rack structure, there is a problem in that it is difficult to separate only the module on fire. That is, there are problems in that it is difficult to separate the module on fire within a short time because the module and rack are connected by bolts and nuts and it is difficult to easily separate an electric wire for a high voltage and high current because the electric wire is also connected to the module by bolts and nuts.

### SUMMARY

Embodiments of the present disclosure are to provide a system and method for automatically releasing a battery module, which can safely operate a battery storage device by rapidly releasing, separating, and isolating a battery or module in which an issue has occurred from the entire system before a fire occurs or at the start of a fire when preset conditions (e.g., the state in which more than 60°C is maintained for three seconds) are satisfied.

However, objects of the present disclosure are not limited to the aforementioned object, and other objects not described herein may be evidently understood by those skilled in the art from the following description.

A system for automatically releasing a battery module according to embodiments of the present disclosure includes a battery module including at least one battery cell, a battery rack in which the battery module is held, and a battery control unit configured to perform control to automatically release the battery module from the battery rack. The battery module is fixed on a module installation structure incline of the battery rack by a module fixing device, and is released from the battery rack along the module installation structure incline as the module fixing device is operated under the control of the battery control unit when an issue occurs in the battery module.

The module installation structure incline is disposed at an inclined angle of 1° to 90° to a horizontal axis of the battery rack.

The battery module includes a sensor that senses a temperature, a voltage, and a current and transmits sensing information to the battery control unit.

Connection parts of the battery module and the battery rack are magnetically connected.

The battery control unit performs control to sequentially release battery modules located at the lowest layer among the battery modules disposed in a plurality of layers, up to the battery module located at the highest layer.

The battery control unit performs simultaneous release control on the battery modules disposed in a plurality of layers.

The system for automatically releasing a battery module according to embodiments of the present disclosure further includes an extinguishment agent spray device disposed at one end of the module installation structure incline.

The extinguishment agent spray device adjusts at least any one of a spray direction, spray angle, and spray distance of an extinguishment agent under the control of the battery control unit.

A method of automatically releasing a battery module according to embodiments of the present disclosure includes steps of (a) disposing a battery module support component, (b) monitoring battery module state information, and (c) releasing a battery module in which an issue has occurred from an entire structure by operating the battery module support component based on the results of the monitoring.

The step (a) includes disposing the battery module on a module installation structure incline within a battery rack and disposing a module fixing device at one end of the module installation structure incline.

The step (b) includes determining the occurrence of the issue, when temperature information obtained by a temperature sensor is a preset temperature or more, the preset temperature is maintained for a preset time or more, a difference between a charging and discharging voltage specification and a preset voltage occurs, or the difference between the charging and discharging voltage specification and the preset voltage is maintained for a preset time or more.

The step (c) includes controlling the battery module in which the issue has occurred to be moved along the module installation structure incline and released by operating the battery module support component, and spraying an extinguishment agent by operating the extinguishment agent spray device.

The step (c) includes operating the battery module support component so that battery modules are sequentially released from a battery module located at the lowest layer among the battery modules disposed in a plurality of layers, up to a battery module located at the highest layer.

The step (c) includes operating the battery module support component so that battery modules disposed in a plurality of layers are simultaneously released.

A system for automatically releasing a battery module according to embodiments of the present disclosure includes memory in which a program that performs automatic release control on a battery module based on sensed information of the battery module has been stored and a processor configured to execute the program. The processor performs control to move a battery module along a module installation structure incline and to be released, by operating a module fixing device disposed on one side of the module installation structure incline on which the battery module is disposed.

The processor operates the module fixing device by determining an occurrence of an issue, when temperature information obtained by a temperature sensor is preset temperature or more, a preset temperature is maintained for a preset time or more, a difference between a charging and discharging voltage specification and a preset voltage occurs, or the difference between the charging and discharging voltage specification and the preset voltage is maintained for a preset time or more.

The processor transmits a control command for an extinguishment agent spray device so that an extinguishment agent is sprayed in a process of releasing the battery module.

The processor operates the battery module fixing device so that battery modules are sequentially released from a battery module located at the lowest layer among the battery modules disposed in a plurality of layers, up to a battery module located at the highest layer.

The processor operates the battery module fixing device so that the plurality of battery modules disposed in a plurality of layers are simultaneously released.

The processor performs change control on at least any one of an order that the plurality of battery modules is released and a direction in which the plurality of battery modules is released.

According to embodiments of the present disclosure, it is possible to minimize damage to the entire system caused by a fire, by selectively releasing a battery module a high temperature or the generation of heat of which is detected in a stack structure having a module unit from the entire structure, sequentially releasing battery modules from the lowest layer to the highest layer, or simultaneously releasing all of the battery modules.

Effects of the present disclosure are not limited to the aforementioned effects, and the other effects not described herein may be evidently understood by those skilled in the art from the following description.

At least some of the above and other features of the invention are set out in the claims.

### BRIEF DESCRIPTION OF THE DRAWINGS

The following drawings attached to this specification illustrate preferred embodiments of the present disclosure, and help to further understand the technical scope of the present disclosure along with the aforementioned contents of the disclosure. Accordingly, the present disclosure should not be construed as being limited to only contents described in such drawings:
FIG. 1 schematically illustrates an electrode assembly of a secondary battery;
FIG. 2 schematically illustrates a configuration of a pouch-type secondary battery;
FIG. 3 illustrates a schematic external appearance configuration of a prismatic secondary battery;
FIG. 4 is a cross-sectional view of a cylindrical secondary battery;
FIG. 5 illustrates a battery module stack structure according to a conventional technology.
FIG. 6 illustrates a structure of a system for automatically releasing a battery module according to embodiments of the present disclosure.
FIG. 7 illustrates the state before the system for automatically releasing a battery module according to embodiments of the present disclosure automatically releases an issue module (i.e. a module where an issue has occurred).
FIG. 8 illustrates the state after the system for automatically releasing a battery module according to embodiments of the present disclosure automatically releases an issue module.
FIG. 9 illustrates the state before the system for automatically releasing a battery module according to embodiments of the present disclosure automatically releases a plurality of issue modules.
FIG. 10 illustrates the state after the system for automatically releasing a battery module according to embodiments of the present disclosure automatically releases a plurality of issue modules.
FIG. 11 illustrates a method of automatically releasing a battery module according to embodiments of the present disclosure.
FIG. 12 is a block diagram illustrating a computer system for implementing a method according to embodiments of the present disclosure.
FIG. 13 is an example view of a secondary battery module in which secondary batteries manufactured according to examples of the present disclosure are arranged;
FIG. 14 is an example view of a secondary battery pack including the secondary battery module illustrated in FIG. 13; and
FIG. 15 is a conceptual view of a vehicle including the secondary battery pack illustrated in FIG. 14.

### DETAILED DESCRIPTION

Hereinafter, example embodiments of the present disclosure will be described, in detail, with reference to the accompanying drawings. The terms or words used in the present specification and claims are not to be limitedly interpreted based on their general or ordinary meaning, and should be interpreted as meanings and concepts that are consistent with the technical idea of the present disclosure on the basis of the principle that an inventor can be their own lexicographer to appropriately define concepts of terms to describe their disclosure in the best way.

The example embodiments described in this specification and the configurations shown in the drawings are only some example embodiments of the present disclosure and do not represent all of the aspects of the present disclosure. Accordingly, it should be understood that there may be various equivalents and modifications that can replace or modify one or more example embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this disclosure.

References to two compared elements, features, etc. As being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing example embodiments of the present disclosure and is not intended to limit the present disclosure.

If a module on fire is fixed to a rack structure, there is a problem in that it is difficult to separate only the module on fire. That is, there are problems in that it is difficult to separate the module on fire within a short time because the module and a rack are connected by bolts and nuts and it is difficult to easily separate an electric wire for a high voltage and high current because the electric wire is also connected to the module by bolts and nuts.

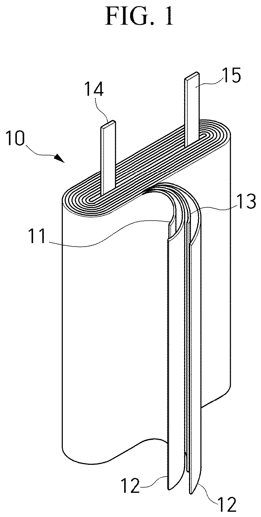

FIG. 1 schematically illustrates an electrode assembly 10 for location in a case of a secondary battery.

The electrode assembly 10 may be formed by winding or stacking a first electrode plate 11, a separator 12, and a second electrode plate 13, which are formed as thin plates or films. When the electrode assembly 10 is a wound stack, a winding axis may be parallel to the longitudinal direction (e.g., the y direction) of the case. In other example embodiments, the electrode assembly 10 may be a stack type rather than a winding type, and the shape of the electrode assembly 10 is not limited in the examples of the present disclosure. In addition, the electrode assembly 10 may be or include a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the examples of the present disclosure. The first electrode plate 11 of the electrode assembly 10 may act as a negative electrode, and the second electrode plate 13 may act as a positive electrode. In other examples, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode tab 14 may be connected to an external first terminal (not shown). In some example embodiments, when the first electrode plate 11 is manufactured, the first electrode tab 14 may be formed by being cut in advance to protrude to one side of the electrode assembly 10, or the first electrode tab 14 may protrude to one side of the electrode assembly 10 more than, e.g., farther than or beyond, the separator 12 without being separately cut.

The second electrode plate 13 may be formed by applying a second electrode active material, such as a transition metal oxide, on a second electrode current collector formed of or including a metal foil, such as aluminum or an aluminum alloy. The second electrode plate 13 may include a second electrode tab 15 (e.g., a second uncoated portion) that is or includes a region to which the second electrode active material is not applied. The second electrode tab 15 may be connected to an external second terminal (not shown). In some example embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than, e.g., farther than or beyond, the separator 12 without being separately cut.

In some example embodiments, the first electrode tab 14 may be located on the left side of the electrode assembly 10, and the second electrode tab 15 may be located on the right side of the electrode assembly 10. In other example embodiments, the first electrode tab 14 and the second electrode tab 15 may be located on one side of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 hinders or substantially prevents a short-circuit between the first electrode 11 and the second electrode 13 while allowing movement of lithium ions therebetween. The separator 12 may be made of or include, for example, a polyethylene film, a polypropylene film, a polyethylene-polypropylene film, etc.

In some example embodiments, the electrode assembly 10 may be accommodated in the case (not shown) along with an electrolyte. In the case of a pouch-type secondary battery, an electrode assembly 10 may be accommodated in a pouch made of or including flexible material in the form illustrated in FIG. 1. In the case of a prismatic secondary battery, an electrode assembly 10 may be accommodated in a prismatic metal casing in the form illustrated in FIG. 1.

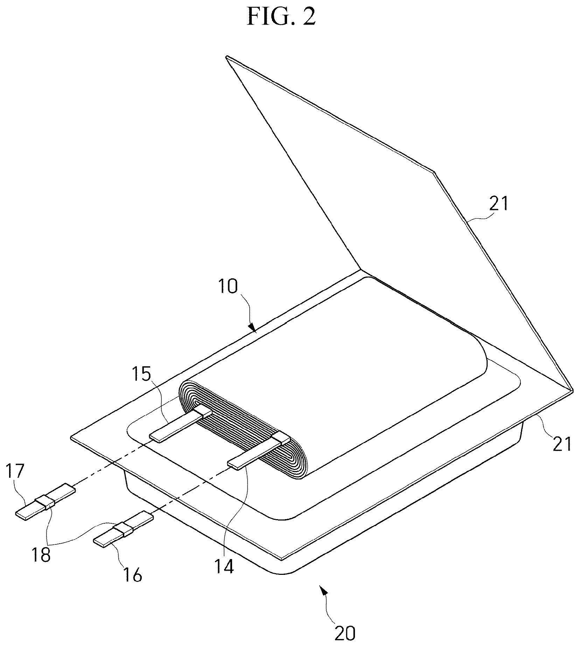

FIG. 2 schematically illustrates the pouch-type secondary battery.

The pouch-type secondary battery includes an electrode assembly 10 and a pouch 20 that accommodates or contains the electrode assembly 10 therein.

The electrode assembly 10 may be the same as the electrode assembly 10 illustrated in FIG. 1. The first electrode tab 14 and the second electrode tab 15 of the electrode assembly 10 may be electrically connected to respective external first and second terminal leads 16 and 17 by, e.g., welding or other attaching method that preserves conductivity therebetween. At least a portion of each of the first terminal lead 16 and the second terminal lead 17 may be attached or covered with a tab film 18 for insulation from the pouch 20.

The pouch 20 may be sealed by having sealing parts 21 at the edges thereof come into contact with each other while accommodating or containing the electrode assembly 10 therein, in which case the sealing may be achieved with the tab film 18 interposed between the sealing parts 21. The sealing parts 21 of the pouch 20 may be made of or include a thermal fusion material that generally has weak adhesion to metal. Thus, it may be fused to the pouch 20 by interposing the thin tab film 18 between the sealing parts 21.

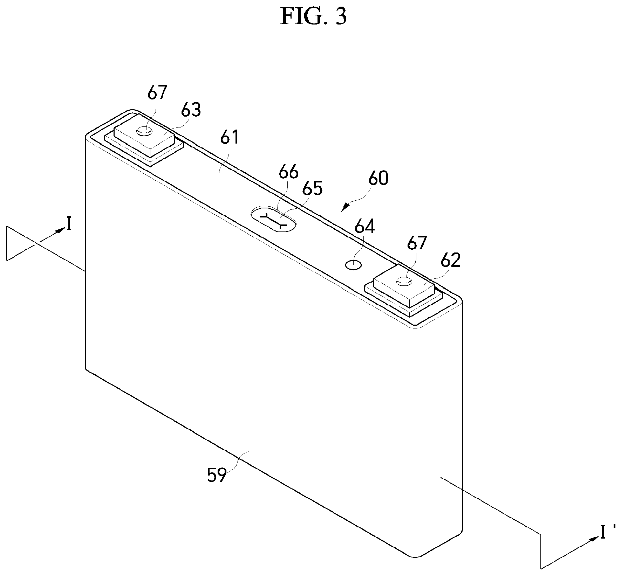

FIG. 3 illustrates a schematic external appearance configuration of a prismatic secondary battery.

A prismatic case 59 defines an overall appearance of the prismatic secondary battery, and may be made of or include a conductive metal, such as aluminum, aluminum alloy, or nickel-plated steel. In addition, the case 59 may provide a space for accommodating or containing the electrode assembly 10 therein.

A cap assembly 60 may include a cap plate 61 that covers an opening of the case 59, and the case 59 and the cap plate 61 may be made of or include a conductive material. A first terminal 63 and a second terminal 62 may be electrically connected to the first electrode tab 14 and the second electrode tab 15 of the electrode assembly 10 illustrated in FIGS. 1 and 2 inside the case 59, and may be installed to protrude outward through the cap plate 61.

The cap plate 61 may be equipped with or include an electrolyte injection port 64 configured to install a sealing plug therein, and a vent 66 formed that includes a notch 65 may be installed. The vent 66 is configured to discharge any gas generated inside the secondary battery.

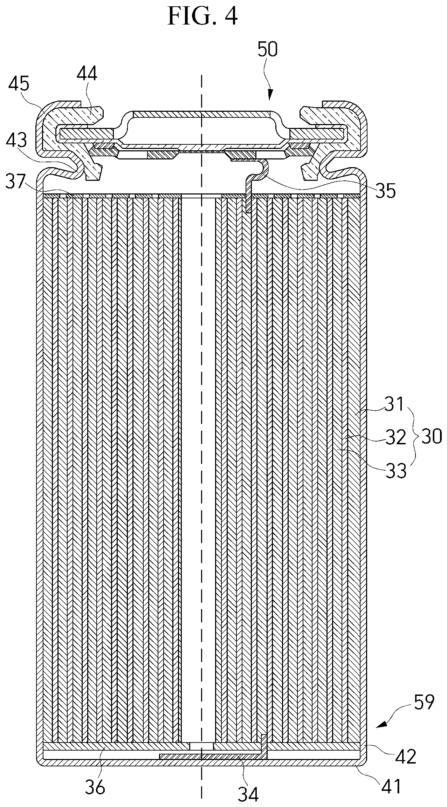

FIG. 4 is a cross-sectional view of a cylindrical secondary battery.

The cylindrical secondary battery includes an electrode assembly 30, a case 59 accommodating the electrode assembly 30 and an electrolyte therein, a cap assembly 50 coupled to an opening of the case to seal the case 59, and an insulating plate 37 located between the electrode assembly 30 and the cap assembly 50 inside the case 59.

The electrode assembly 30 may include a separator 32 between a first electrode 33 and a second electrode 31, and the electrode assembly 30 may be wound in a jelly-roll form.

The first electrode 33 may include a first substrate and a first active material layer located on the first substrate. A first lead tab 35 may extend outward from a first uncoated portion of the first substrate where the first active material layer is not located, and may be electrically connected to the cap assembly 50.

The second electrode 31 may include a second substrate and a second active material layer located on the second substrate. A second lead tab 34 may extend outward from a second uncoated portion of the second substrate where the second active material layer is not located, and may be electrically connected to the case 59. The first lead tab 35 and the second lead tab 34 may extend in opposite directions with respect to each other.

The first electrode 33 may constitute a positive electrode. In this case, the first substrate may be composed of or include, for example, aluminum foil, and the first active material layer may include, for example, a transition metal oxide. The second electrode 31 may constitute a negative electrode. In this case, the second substrate may be composed of or include, for example, copper foil or nickel foil, and the second active material layer may include, for example, graphite.

The separator 32 may reduce or prevent a short-circuit between the first electrode 33 and the second electrode 31 while allowing movement of lithium ions therebetween. The separator 32 may be made of or include, for example, at least one of a polyethylene film, a polypropylene film, a polyethylene-polypropylene film, etc.

The case 59 accommodates or contains the electrode assembly 30 and the electrolyte, and substantially forms the external appearance of the secondary battery together with the cap assembly 50. The case 59 may have a substantially cylindrical body portion 42, and a bottom portion 41 connected to one side of the body portion 42. A beading part 43 deformed inwardly may be formed in the body portion 42, and a crimping part 45 bent inwardly may be formed at an open end of the body portion 42.

The beading part 43 may reduce or prevent movement of the electrode assembly 30 inside the case, and may facilitate seating of a gasket 44 and the cap assembly 50. A crimping part 45 may firmly fix the cap assembly 50 by pressing the edge of the cap assembly 50 against the gasket 44. The case 59 may be formed of or include iron plated with nickel, for example.

The cap assembly 50 may be fixed to the inside of the crimping part 45 through the gasket 44 to seal the case 59. The cap assembly 50 may include a cap up, a safety vent, a cap down, an insulating member, and a subplate, but is not limited to this example and may be variously modified.

The cap up may be located at the very top of the cap assembly 50. The cap up may include a terminal portion that protrudes convexly upward and is connected to an external circuit, and an outlet for discharging gas may be located around the terminal portion.

The safety vent may be located below the cap up. The safety vent may include a protrusion that protrudes convexly downward and is connected to the subplate, and at least one notch located around the protrusion.

When gas is generated due to overcharging or abnormal operation of the secondary battery, the protrusion may be deformed upward by pressure and may separate from the subplate, while the safety vent may be cut along the notch. The cut safety vent may hinder or prevent the secondary battery from exploding by discharging gas to the outside.

The cap down may be located below the safety vent. The cap down may be formed with a first opening for exposing the protrusion of the safety vent and a second opening for discharging gas. The insulating member may be located between the safety vent and the cap down to insulate the safety vent and the cap down.

The subplate may be located below the cap down. The subplate may be fixed to a lower surface of the cap down to block the first opening of the cap down, and the protrusion of the safety vent may be fixed to the subplate. The first lead tab 35 pulled out from the electrode assembly 30 may be fixed to the subplate. Accordingly, the cap up, the safety vent, the cap down, and the subplate may be electrically connected to the first electrode 33 of the electrode assembly 30.

The insulating plate 37 may be located below the beading portion 43 to be in contact with the electrode assembly 30, and may be provided with a tab opening for pulling out the first lead tab 35. The cap assembly 50, which is electrically connected to the first electrode 33 by the first lead tab 35, may face the electrode assembly 30 with the insulating plate 37 interposed therebetween, and may maintain an insulated state from the electrode assembly 30 by the insulating plate 37. On the other hand, another insulating plate 36 may be included for insulation between the electrode assembly 30 and the bottom portion 41 of the case.

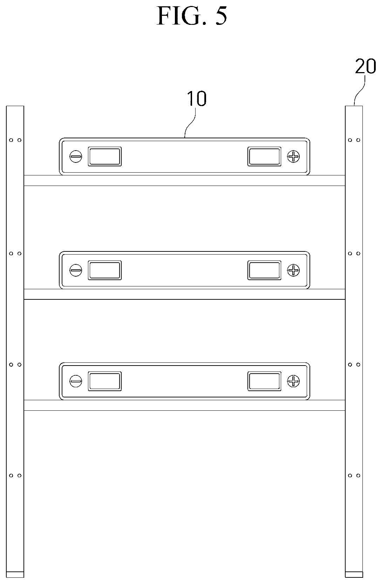

FIG. 5 illustrates a battery module stack structure according to a conventional technology.

According to the conventional technology, a battery module 10 is stacked on a structure for a battery rack 20. A surface on which the battery module 10 is seated is a bottom surface not having an incline.

The conventional technology has a problem in that the full extent of damage is increased because a fire affects surrounding batteries connected to a battery on fire when heat is generated in any one battery of an ESS system and is turned into the fire.

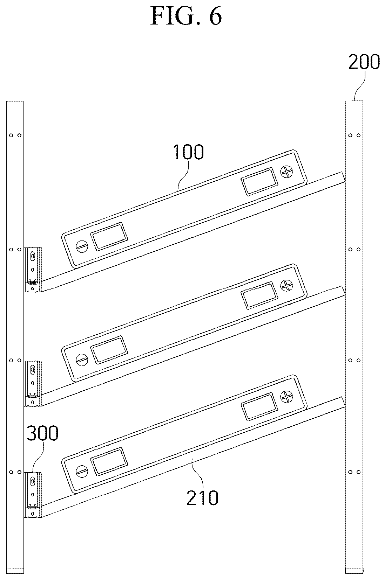

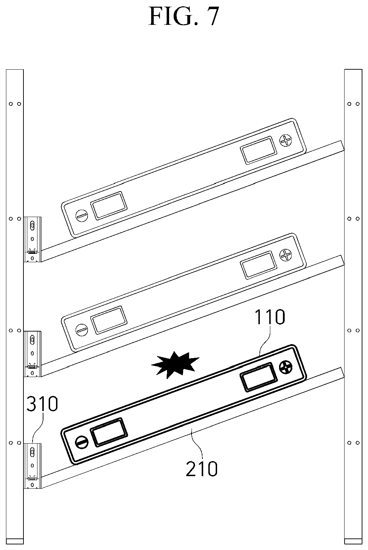

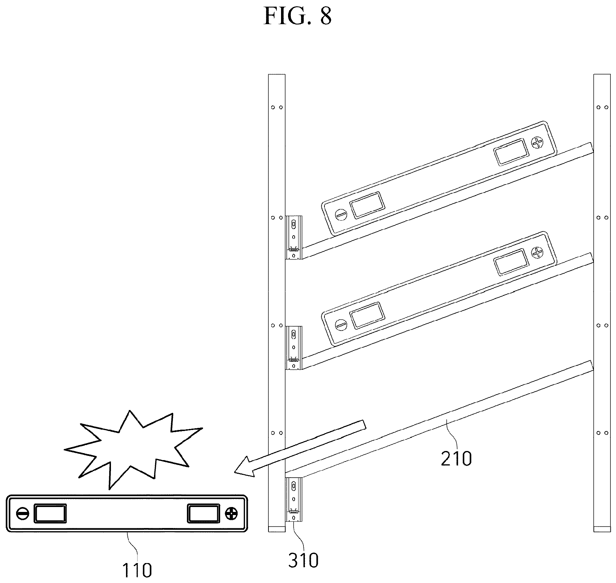

FIG. 6 illustrates a structure of a system for automatically releasing a battery module according to embodiments of the present disclosure. FIG. 7 illustrates the state before the system for automatically releasing a battery module according to embodiments of the present disclosure automatically releases a module . FIG. 8 illustrates the state after the system for automatically releasing a battery module according to embodiments of the present disclosure automatically releases an issue module.

In the system for automatically releasing a battery module according to embodiments of the present disclosure, a battery module 100 may be disposed on a module installation structure incline 210 within a battery rack 200. A module fixing device 300 may fix the battery module 100 on the module installation structure incline 210 at normal times.

As the module fixing device 300 operates, the module fixing device 300 may move to a lower part of the module installation structure incline 210 in a sliding manner, may operate in a hinge mechanism, and may be detached due to a magnetic change, but the present disclosure is not limited to a specific operation method of the module fixing device 300.

Furthermore, the module installation structure incline 210 may additionally include a detachment auxiliary device, such as a guide roll or a roller.

When a module fixing device 310 (of the module fixing devices 300) in a corresponding issue occurrence area is unlocked due to the occurrence of an issue, a battery module 110 (of the battery modules 100) that is supported by the module fixing device 310 may be automatically separate and released along the module installation structure incline 210 by gravity.

The module fixing device 310 may be disposed on one side of the module installation structure incline 210, and may immediately separate and release a corresponding battery module 110 when heat having a high temperature is generated or a fire occurs. The module installation structure incline 210 may be disposed to form a horizontal axis versus preset angle (e.g., between 35° to 70°) of the battery rack 200.

The height of the module installation structure incline 210 may be controlled through a rack control device (not illustrated). When temperature information that is obtained by a temperature sensor is a preset temperature (e.g., 60°C) or more, a preset temperature is maintained for a preset time or more, or a difference between a charging and discharging voltage specification and a preset voltage (e.g., a difference of 0.1 V) is maintained for a preset time (e.g., 3 seconds) or more, an abnormal signal may be transmitted to a rack battery control unit (BCU). The rack BCU may release the battery module 110 in which an issue has occurred to the outside of the battery rack 200 by transmitting a control command that unlocks the module fixing device 310.

The rack BCU may transmit a control command that unlocks a module fixing device that is disposed at one end of the module installation structure incline on which a battery module in which an issue has occurred is disposed, may transmit a control command that sequentially unlocks module fixing devices so that battery modules disposed in a plurality of layers are sequentially released from a battery module disposed in the lowest layer to a battery module disposed in the highest layer, and may transmit a control command that simultaneously unlocks all of module fixing devices so that battery modules disposed in a plurality of layers are simultaneously released.

A connector may be connected to an electric wire to which the battery module 110 and the battery rack 20 are connected, by a magnet. When the battery module 110 slides down along the module installation structure incline 210 by gravity, the connector may be detached. That is, when the locking state of the module fixing device 310 is released and the battery module 110 is moved along the module installation structure incline 210, the connector that is connected to the battery module 110 by a magnet is separated from the battery rack 200.

The battery module 110 that has been released from the battery rack 200 may be ignited, but the battery module 110 itself is ignited, and a fire that is generated in the battery module 110a may be extinguished by a manager. Accordingly, damage to the entire system can be minimized.

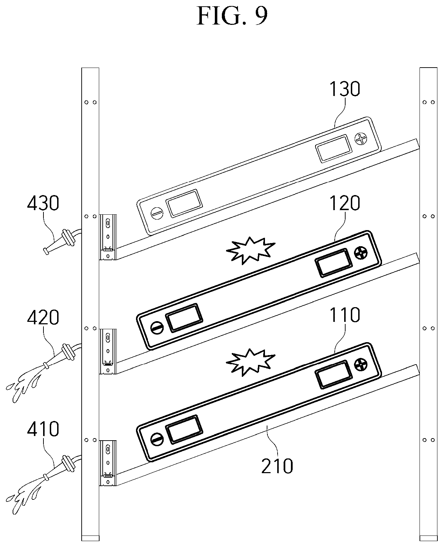

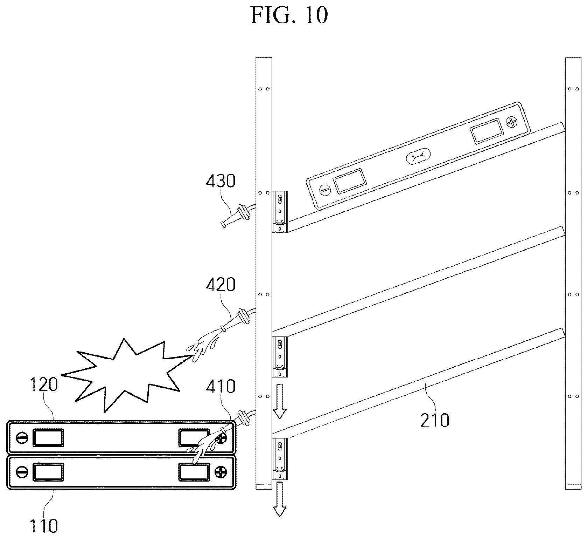

FIG. 9 illustrates the state before the system for automatically releasing a battery module according to embodiments of the present disclosure automatically releases a plurality of issue modules. FIG. 10 illustrates the state after the system for automatically releasing a battery module according to embodiments of the present disclosure automatically releases a plurality of issue modules.

According to embodiments of the present disclosure, battery modules 110, 120, 130 may be disposed on the module installation structure inclines 210. An extinguishment agent spray device 410, 420, 430 may be disposed at one end of an area in which the battery module 110, 120, 130 is disposed.

The extinguishment agent spray device 410, 420, 430 may be disposed to face the outside of the rack BCU on an opposite surface (i.e., a second surface) on the basis of the module fixing device 310 that is disposed on a first surface. As another example, the extinguishment agent spray device 410, 420, 430 may be disposed above an area in which the battery module 110, 120, 130 is installed.

The extinguishment agent spray device 410, 420, 430 may adjust at least any one of a spray direction, spray angle, and spray distance of the extinguishment agent under the control of the rack BCU.

The extinguishment agent spray device 410, 420, 430 may spray the extinguishment agent toward the existing area in which the battery is disposed from timing at which the module fixing device 310 has operated to preset first timing under the control of the rack BCU, and may spray the extinguishment agent in a direction in which the battery module is detached (i.e., a direction in which the battery module is detached along the module installation structure incline) by rotating the direction in which the extinguishment agent is sprayed from the preset first timing to preset second timing under the control of the rack BCU.

As another example, the extinguishment agent spray device 410, 420, 430 may spray the extinguishment agent toward the existing area in which the battery is disposed at a first spray angle from timing at which the module fixing device 310 operates to preset third timing under the control of the rack BCU, and may spray the extinguishment agent in a direction in which the battery module is detached (i.e., a direction in which the battery module is detached along the module installation structure incline) at a second spray angle from the preset third timing to preset fourth timing (in this case, the first timing and the third timing may be adjusted to be the same timing or pieces of different timing, and the second timing and the fourth timing may be adjusted to be the same timing or pieces of different timing) under the control of the rack BCU.

As still another angle, the extinguishment agent spray device 410, 420, 430 may spray the extinguishment agent toward the existing area in which the battery is disposed at a first spray distance from timing at which the module fixing device 310 operates to preset fifth timing under the control of the rack BCU, and may spray the extinguishment agent in a direction in which the battery module is detached (i.e., a direction in which the battery module is detached along the module installation structure incline) at a second spray distance from the preset fifth timing to preset sixth timing (in this case, the fifth timing may be adjusted to be identical with or different from the first timing or the third timing, and the sixth timing may be adjusted to be identical with or different from the second timing or fourth timing).

When the occurrence of an issue in the first battery module 110 and the second battery module 120 is determined through the detection of a temperature and the occurrence of an event, the locking of the module fixing devices 310 that support the first battery module 110 and the second battery module 120, respectively, as described herein may be released (i.e., because the module fixing devices operate). Accordingly, the first battery module 110 and the second battery module 120 may be automatically separated and released from the entire structure along the module installation structure inclines 210, respectively.

At this time, in response to the detection of the temperature and the occurrence of the event, the first extinguishment agent spray device 410 and the second extinguishment agent spray device 420 may operate and spray the extinguishment agents toward the first battery module 110 and the second battery module 120 in each of which an issue has occurred.

According to embodiments of the present disclosure, it is possible to control the order that a plurality of battery modules is released and the direction in which the plurality of battery modules is released when an abnormal state is detected in a plurality of battery modules as described herein. That is, a plurality of battery modules may be simultaneously released or a plurality of battery modules may be automatically released by assigning priorities to the plurality of battery modules, based on the results of the analysis of a change in the progress of sensing data that satisfy preset conditions. Furthermore, a battery module that is released from the entire system may be in the state in which ignition has already started in the battery module, or may be in the state in which the battery module is close to ignition. It is preferred that battery modules that have been released are isolated from each other as much as possible. It is possible to control a plurality of battery modules so that the plurality of battery modules is released with a difference by rotating the direction in which the plurality of battery modules is released at a horizontal axis versus preset angle or more to a single direction, not the single direction. Furthermore, it is possible to control a plurality of battery modules so that battery modules in each of which an issue has occurred are simultaneously released in a single direction basically, some battery modules are selectively released immediately in a preset single direction based on the results of the analysis of a change in the progress of sensing data. It is possible to control some other battery modules (e.g., a battery module that is close to a high temperature and heat generation state, for example, when an immediate ignition danger is not present in the battery module, or although an issue has not occurred in the battery module, the battery module near an issue occurrence area is preliminarily automatically separated and released as described later) so that the some other battery modules are released by rotating by rotating the direction in which the some other battery modules are disposed at a horizontal axis versus preset angle or more in order to prevent the some other battery modules from being influenced by the ignition of another adjacent battery module.

Furthermore, it is also possible to preliminarily automatically separate and release a preset number of battery modules in an area that is close to an adjacent battery module when the adjacent battery module is automatically separated and released although preset conditions are not satisfied, without simply determining to automatically separate and release a corresponding battery module when the preset conditions are satisfies.

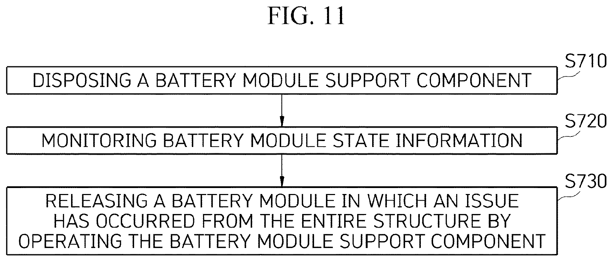

FIG. 11 illustrates a method of automatically releasing a battery module according to embodiments of the present disclosure.

The method of automatically releasing a battery module according to embodiments of the present disclosure may include step S710 of disposing a battery module support component, step S720 of monitoring battery module state information, and step S730 of releasing a battery module in which an issue has occurred from the entire structure by operating the battery module support component.

In step S710, the battery module may be disposed on the module installation structure incline within the battery rack. The module fixing device may be disposed at one end of the module installation structure incline.

The module fixing device may fix the battery module by supporting the battery module at normal times. A connector is connected to an electric wire that is connected to the battery module and the battery rack, by a magnet.

In step S720, it is checked whether temperature information that is obtained by a temperature sensor is a preset temperature (e.g., 60°C) or more, a preset temperature is maintained for a preset time or more, or a difference between a charging and discharging voltage specification and a preset voltage (e.g., a difference of 0.1 V) is maintained for a preset time (e.g., 3 seconds) or more.

When it is determined that an issue has occurred in the battery module in step S720, in step S730, the battery module in which the issue has occurred may be controlled so that the battery module is moved along the module installation structure incline and released to the outside of the battery rack by transmitting a control command that unlocks the module fixing device. The battery module in which the issue has occurred may slide down along the module installation structure incline, and thus the connector connected to the electric wire that is connected to the battery module and the battery rack by the magnet is detached.

In step S730, the extinguishment agent spray device may operates and spray an extinguishment agent toward the exiting area in which the battery module has been installed in the process of the battery module in which the issue has occurred being detached or an area after the battery module is detached.

According to embodiments of the present disclosure, in step S730, the order that a plurality of battery modules is released and the direction in which the plurality of battery modules is released may be changed and controlled. A plurality of battery modules may be simultaneously released or a plurality of battery modules may be automatically released by assigning priorities to the plurality of battery modules, based on the results of the analysis of a change in the progress of sensing data that satisfy preset conditions or are satisfying the preset conditions.

According to embodiments of the present disclosure, when it is determined to release a plurality of battery modules, in step S730, angles at which the plurality of battery modules is released may be differently controlled with a difference by rotating the direction in which the plurality of battery modules is released at a horizontal axis versus preset angle or more to a single direction, not the single direction. In this case, battery modules in each of which an issue has occurred may be rapidly released simultaneously in a single direction basically, but some battery modules may be selectively released immediately in a preset single direction based on the results of the analysis of a change in the progress of sensing data. Furthermore, the angles at which the plurality of battery modules is released may be differently adjusted so that the some other battery modules (e.g., a battery module that is close to a high temperature and heat generation state, for example, when an immediate ignition danger is not present in the battery module, or although an issue has not occurred in the battery module, the battery module near an issue occurrence area is preliminarily automatically separated and released as described later) are not influenced by the ignition of another adjacent battery module after being detached.

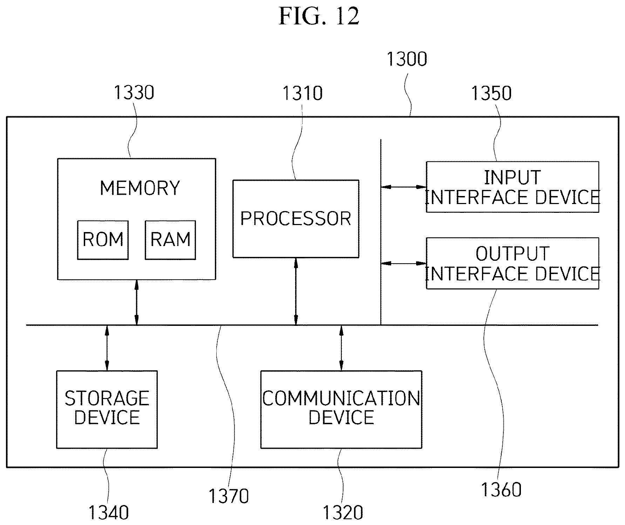

FIG. 12 is a block diagram illustrating a computer system for implementing a method according to embodiments of the present disclosure.

Referring to FIG. 12, a computer system 1300 may include at least one of a processor 1310, memory 1330, an input interface device 1350, an output interface device 1360, and a storage device 1340 that communicate with each other through a bus 1370. The computer system 1300 may further include a communication device 1320 that combined with a network. The processor 1310 may be a central processing unit (CPU), or may be a semiconductor device that executes an instruction that is stored in the memory 1330 or the storage device 1340. The memory 1330 and the storage device 1340 may each include various forms of volatile or nonvolatile storage media. For example, the memory may include read only memory (ROM) and random access memory (RAM). In embodiments of the present disclosure, the memory may be disposed inside or outside the processor, and the memory may be connected to the processor through various well-known means. The memory may be various forms of volatile or nonvolatile storage media, and may include read-only memory (ROM) or random access memory (RAM), for example.

The system for automatically releasing a battery module according to embodiments of the present disclosure includes the memory 1330 in which a program that performs automatic release control on a battery module based on sensed information of the battery module has been stored and the processor 1310 that executes the program. The processor 1310 controls the battery module to be moved along the module installation structure incline and to be removed by operating the module fixing device disposed on one side of the module installation structure incline on which the battery module is disposed.

The processor 1310 operates the module fixing device by determining the occurrence of an issue, when temperature information obtained by a temperature sensor is preset temperature or more, a preset temperature is maintained for a preset time or more, a difference between a charging and discharging voltage specification and a preset voltage occurs, or the difference between the charging and discharging voltage specification and the preset voltage is maintained for a preset time or more.

The processor 1310 transmits a control command for the extinguishment agent spray device so that an extinguishment agent is sprayed in a process of releasing the battery module.

The processor 1310 performs change control on at least any one of the order that a plurality of battery modules is released and a direction in which a plurality of battery modules is released, when controlling the plurality of battery modules to be released.

Accordingly, embodiments of the present disclosure may be implemented as a method implemented in a computer or may be implemented as a non-transitory computer-readable medium in which a computer-executable instruction has been stored. In embodiments, when being executed by a processor, a computer-readable instruction may perform a method according to at least one aspect of this writing.

The communication device 1320 may transmit or receive a wired signal or a wireless signal.

Furthermore, the method according to embodiments of the present disclosure may be implemented in the form of a program instruction which may be executed through various computer means, and may be recorded on a computer-readable medium.

The computer-readable medium may include a program instruction, a data file, and a data structure alone or in combination. A program instruction recorded on the computer-readable medium may be specially designed and constructed for embodiments of the present disclosure or may be known and available to those skilled in the computer software field. The computer-readable medium may include a hardware device configured to store and execute the program instruction. For example, the computer-readable medium may include magnetic media such as a hard disk, a floppy disk, and a magnetic tape, optical media such as CD-ROM and a DVD, magneto-optical media such as a floptical disk, ROM, RAM, and flash memory. The program instruction may include not only a machine code produced by a compiler, but a high-level language code capable of being executed by a computer through an interpreter.

Hereinafter, any material that may be usable for the secondary battery according to examples of the present disclosure will be described.

As the positive electrode active material, a compound capable of reversibly intercalating/deintercalating lithium (e.g., a lithiated intercalation compound) may be used. For example, at least one of a composite oxide of lithium and a metal such as at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by at least any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O₂₋ₐDₐ (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the herein formulas: A is or includes at least Ni, Co, Mn, or a combination thereof; X is or includes at least Al, Ni, Co, Mn, Cr, Fe, Mg, Sr, V, a rare earth element, or a combination thereof; D is or includes at least O, F, S, P, or a combination thereof; G is or includes at least Al, Cr, Mn, Fe, Mg, La, Ce, Sr, V, or a combination thereof; and L1 is or includes at least Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be or include aluminum (Al) but is not limited thereto.

The negative electrode active material may include a material capable of reversibly intercalating/deintercalating at least one of lithium ions, lithium metal, an alloy of lithium metal, a material capable of being doped and undoped with lithium, or a transition metal oxide.

The material capable of reversibly intercalating/deintercalating lithium ions may be or include a carbon-based negative electrode active material, which may include, for example, at least crystalline carbon, amorphous carbon, or a combination thereof. Examples of the crystalline carbon may include graphite, such as natural graphite or artificial graphite, and examples of the amorphous carbon may include at least one of soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be or include at least silicon, a silicon-carbon composite, SiOx (0 < x < 2), a Si-based alloy, or a combination thereof.

The silicon-carbon composite may be or include a composite of silicon and amorphous carbon. According to one example embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, at least one of copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may constitute a medium through which ions involved in the electrochemical reaction of the battery can move.

The non-aqueous organic solvent may be or include at least a carbonate-based, an ester-based, an ether-based, a ketone-based, an alcohol-based solvent, an aprotic solvent, and may be used alone or in combination of two or more.

Depending on the type of lithium secondary battery, a separator may be present between the first electrode plate (e.g., the negative electrode) and the second electrode plate (e.g., the positive electrode). As the separator, at least polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

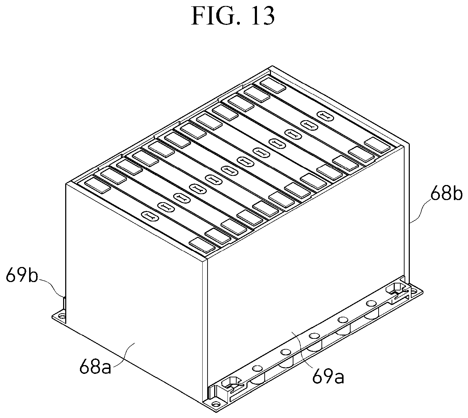

FIG. 13 is an illustration of a secondary battery module in which secondary batteries manufactured according to examples of the present disclosure are arranged. With the increase in secondary battery capacity for driving electric vehicles, and the like, a secondary battery module may be manufactured by arranging and connecting a plurality of secondary battery cells transversely and/or longitudinally. The plurality of secondary batteries may be arranged in a space defined by a pair of facing end plates 68a, 68b and a pair of facing side plates 69a, 69b. The secondary batteries may be designed appropriately in arrangement (direction) and number to obtain desired voltage and current specifications.

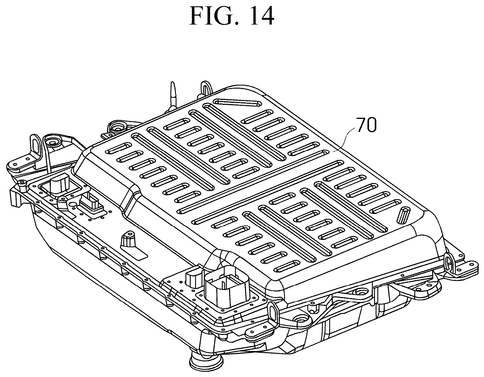

FIG. 14 is an illustration schematically showing the configuration of a battery pack 70 according to example embodiments of the present disclosure. Referring to FIG. 14, the battery pack 70 may include an assembly to which individual batteries are electrically connected, and a pack housing accommodating the same. In the drawings, for convenience of illustration, components including a bus bar, a cooling unit, external terminals for electrically connecting batteries, etc., are not shown.

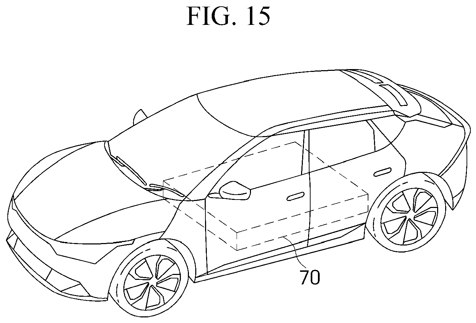

The battery pack 70 may be mounted on (or in) a vehicle. The vehicle may be, for example, an electric vehicle, a hybrid vehicle, a plug-in hybrid vehicle, and the like. The vehicle may be a four-wheeled vehicle or a two-wheeled vehicle but is not limited thereto. FIG. 15 shows a vehicle V which includes the battery pack 70 shown in FIG. 14 on the lower body thereof. The vehicle V may operate by (e.g., may be powered by) receiving power from the battery pack 70.

Although the present disclosure has been described herein with respect to example embodiments thereof, the present disclosure is not limited thereto. Various modifications and variations can be made thereto by those skilled in the art within the scope of the present disclosure and the equivalent scope of the appended claims.

## Claims

1. A system for automatically releasing a battery module, comprising:
a battery module comprising at least one battery cell;
a battery rack in which the battery module is held; and
a battery control unit configured to perform control to automatically release the battery module from the battery rack,
wherein the battery module is fixed on a module installation structure incline of the battery rack by a module fixing device, and is released from the battery rack along the module installation structure incline as the module fixing device is operated under the control of the battery control unit when an issue occurs in the battery module.

2. The system as claimed in claim 1, wherein the module installation structure incline is disposed at an inclined angle of 1° to 90° to a horizontal axis of the battery rack.

3. The system as claimed in claim 1 or 2, wherein the battery module comprises a sensor that senses a temperature, a voltage, and a current and transmits sensing information to the battery control unit.

4. The system as claimed in claim 1, 2 or 3, wherein connection parts of the battery module and the battery rack are magnetically connected.

5. The system as claimed in any preceding claim, wherein at least one of:
the battery control unit performs control to sequentially release battery modules disposed in a plurality of layers from a battery module disposed in a lowest layer to a battery module disposed in a highest layer; and
the battery control unit performs simultaneous release control on the battery modules disposed in a plurality of layers.

6. The system as claimed in any preceding claim, further comprising an extinguishment agent spray device disposed at one end of the module installation structure incline,
and wherein optionally the extinguishment agent spray device adjusts at least any one of a spray direction, spray angle, and spray distance of an extinguishment agent under the control of the battery control unit.

7. A method of automatically releasing a battery module, which is performed by a system, the method comprising steps of:
(a) disposing a battery module support component;
(b) monitoring battery module state information; and
(c) releasing from an entire structure a battery module in which an issue has occurred by operating the battery module support component based on the results of the monitoring.

8. The method as claimed in claim 7, wherein the step (a) comprises:
disposing the battery module on a module installation structure incline within a battery rack, and
disposing a module fixing device at one end of the module installation structure incline.

9. The method as claimed in claim 7 or 8, wherein the step (b) comprises determining the occurrence of the issue, when temperature information obtained by a temperature sensor is a preset temperature or more, the preset temperature is maintained for a preset time or more, a difference between a charging and discharging voltage specification and a preset voltage occurs, or the difference between the charging and discharging voltage specification and the preset voltage is maintained for a preset time or more.

10. The method as claimed in claim 7, 8 or 9, wherein the step (c) comprises:
controlling the battery module in which the issue has occurred to be moved along the module installation structure incline and released by operating the battery module support component; and
spraying an extinguishment agent by operating the extinguishment agent spray device.

11. The method as claimed in any one of claims 7 to 10, wherein the step (c) comprises at least one of:
operating the battery module support component so that battery modules disposed in a plurality of layers are sequentially released from a battery module disposed in a lowest layer to a battery module disposed in a highest layer; and
operating the battery module support component so that the battery modules disposed in a plurality of layers are simultaneously released.

12. A system for automatically releasing a battery module, the system comprising:
memory in which a program that performs automatic release control on a battery module based on sensed information of the battery module has been stored; and
a processor configured to execute the program,
wherein the processor performs control to move a battery module along a module installation structure incline and to be released, by operating a module fixing device disposed on one side of the module installation structure incline on which the battery module is disposed.

13. The system as claimed in claim 12, wherein the processor operates the module fixing device by determining an occurrence of an issue, when temperature information obtained by a temperature sensor is a preset temperature or more, the preset temperature is maintained for a preset time or more, a difference between a charging and discharging voltage specification and a preset voltage occurs, or the difference between the charging and discharging voltage specification and the preset voltage is maintained for a preset time or more.

14. The system as claimed in claim 12 or 13, wherein the processor transmits a control command for an extinguishment agent spray device so that an extinguishment agent is sprayed in a process of releasing the battery module.

15. The system as claimed in claim 12, 13 or 14, wherein at least one of:
the processor operates the battery module fixing device so that battery modules disposed in a plurality of layers are sequentially released from a battery module disposed in a lowest layer to a battery module disposed in a highest layer;
the processor operates the battery module fixing device so that the plurality of battery modules disposed in a plurality of layers are simultaneously released; and
the processor performs change control on at least any one of an order that the plurality of battery modules is released and a direction in which the plurality of battery modules is released.
